# EUROPEAN PATENT APPLICATION

(11) **EP 3 906 787 A1**
(43) Date of publication of application: **10.11.2021**
(21) Application number: 20769880.4
(22) Date of filing: 12.03.2020
(51) Int. Cl.: A23L 27/30, A23L 5/20

(54) **COMPOSITION COMPRISING TRANSGLYCOSYLATED STEVIOSIDE AND TRANSGLYCOSYLATED REBAUDIOSIDE A**

(30) Priority: 14.03.2019 KR 20190029392
(71) Applicant: CJ Cheiljedang Corporation, Seoul 04560 (KR)
(72) Inventor: YANG, Tae Joo, Seoul 04560 (KR); CHU, Sun, Seoul 04560 (KR); KANG, In Sung, Seoul 04560 (KR); KIM, Min Hoe, Seoul 04560 (KR); PARK, Sunghee, Seoul 04560 (KR)
(74) Representative: Icosa
(86) International application number: PCT/KR2020/003417
(87) International publication number: WO 2020/184994

(57) **Abstract**

The present disclosure relates to a sweetener composition, comprising a transglycosylated Stevioside and a transglycosylated Rebaudioside A.

## Description

### [Technical Field]

The present disclosure relates to a sweetener composition including a transglycosylated Stevioside and a transglycosylated Rebaudioside A.

### [Background Art]

As the World Health Organization (WHO) recommends lowering the amount of daily sugar intake due to concerns about disease (obesity) caused by sugar consumption, various policies aimed at reducing the amount of sugar intake are actively being discussed by the governments of developed countries. Therefore, as the need for developing various alternative sweeteners is increasing in the market, alternative sweeteners are continuously being developed and commercialized. As alternative sweeteners, these are the subject of continuous variation in the form of synthetic high-intensity sweeteners (*e.g.*, Saccharin, Aspartame, Sucralose, *etc.*)*,* synthetic sugar alcohols (*e.g.,* Maltitol and Xylitol), and high-intensity sweeteners (*e.g*., Rebaudioside A and Liquorice). Nevertheless, due to concerns over the safety of synthetic sweeteners, customers' need for natural sweeteners has been steadily increasing; however, because of limitations to peculiar flavor properties of natural sweeteners (*i.e*., off-smell and off-flavor), natural sweeteners cannot fully replace existing low-calorie and zero-calorie products based on synthetic sweeteners.

A natural high-intensity sweetener that has received considerable attention in recent years is Rebaudioside A, one of the constituents of stevia extracted from the leaves of *Stevia rebaudiana Bertoni.* Alhtough Rebaudioside A has the highest sweetness, it shows a unique bitter taste, poor solubility and high cost, and thus, there is a limitation in application.

Methods to improve the sweetness of Rebaudioside A include a method for transferring a saccharide using an enzyme. As the method for transferring a saccharide using an enzyme, a method for transferring 1 to 12 glucose molecules to a steviol glycoside using CGTase is widely used in the art (Korean Patent Application No. 10-1991-0020769). However, when the glucose transferred to Rebaudioside A is linked via an α-1,4 bond, there is a problem in that the glucosylated Rebaudioside A shows reduced sweetness.

### [Disclosure]

### [Technical Problem]

Under such circumstances, the present inventors have completed the present disclosure by confirming that a composition comprising a transglucosylated Stevioside and a transglucosylated Rebaudioside A, in which glucose is transferred via an α-(1,6) bond, has an improved bitter taste as compared to a non-glucosylated Rebaudioside A and shows excellent sweetness preference and overall preference.

### [Technical Solution]

An object of the present disclosure is to provide a sweetener composition including a transglycosylated Stevioside.

Another object of the present disclosure is to provide a sweetener composition including a transglycosylated Rebaudioside A.

Still another object of the present disclosure is to provide a sweetener composition including a transglycosylated Stevioside and a transglycosylated Rebaudioside A.

Still further another object of the present disclosure is to provide a food composition, including the sweetener composition including a transglycosylated Stevioside and a transglycosylated Rebaudioside A.

### [Advantageous Effects]

The composition of the present disclosure includes a transglycosylated Stevioside and a transglycosylated Rebaudioside A, thereby having an improved bitter taste as compared to Rebaudioside A and showing excellent sweetness preference and overall preference, and thus can be used as a high-intensity sweetener.

### [Brief Description of Drawings]

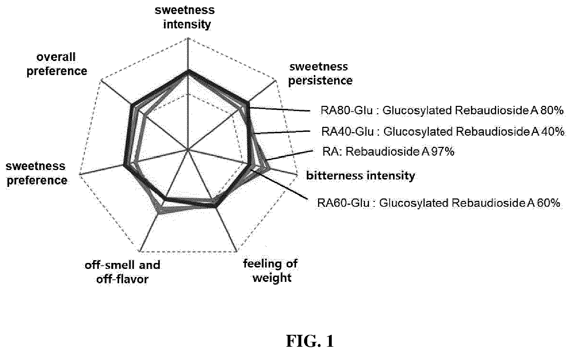

Fig. 1 shows the results of descriptive analysis of compositions (RA40-Glu, RA60-Glu, and RA80-Glu) including the transglycosylated Stevioside and the transglycosylated Rebaudioside A of the present disclosure, in which the transglycosylated Rebaudioside A is contained in an amount of 40/60/80% by weight, respectively, and of control group (RA).

### [Detailed Description of the Invention]

Herein below, the present disclosure will be described in detail. Meanwhile, each of the explanations and exemplary embodiments disclosed herein can be applied to other explanations and exemplary embodiments.

That is, all combinations of various factors disclosed herein belong to the scope of the present disclosure. Furthermore, the scope of the present disclosure should not be limited by the specific disclosure provided hereinbelow. Meanwhile, the terms defined herein can be identically applied to other aspects of the present disclosure.

In order to achieve the objects of the present disclosure, an aspect of the present disclosure provides a sweetener composition including a transglycosylated Stevioside.

As used herein, the term "transglycosylated Stevioside" refers to a compound in which a saccharide is linked (transferred) to Stevioside represented by Chemical Formula 1 below, which is one of the steviol glycosides. In particular, the saccharide may be glucose, and the transglycosylation may be transglucosylation.

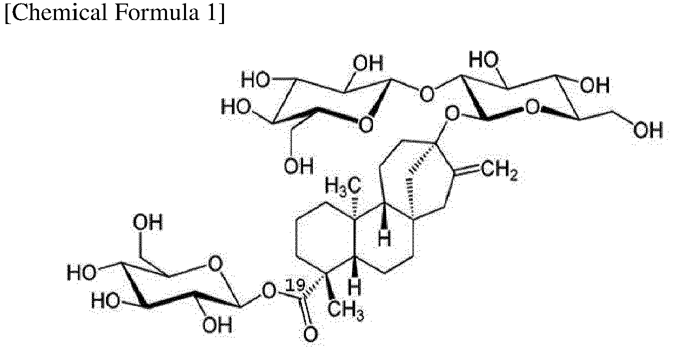

Specifically, the transglycosylated Stevioside may be in the form in which glucose is linked to Stevioside by a linkage via an α-(1,6) bond.

Specifically, the transglycosylated Stevioside may be in the form in which glucose is linked to glucose conjugated to C₁₉ on the Stevioside by a linkage via an α-(1,6) bond.

Specifically, the transglycosylated Stevioside may be in the form in which 1 to 3 glucose molecules are linked to Stevioside.

More specifically, the transglycosylated Stevioside may be produced by reacting sucrose and Stevioside as substrates with a glucosyltransferase.

Specific nucleotide sequence of a gene encoding the glucosyltransferase and protein information thereof can be obtained from a known database such as GenBank of NCBI, *etc.* However, in addition to the above known sequences, any protein may be included as long as it exhibits the same effect of transferring glucose as the glucosyltransferase without limitation to its origin or sequence, and a homologous protein or a variant protein may also be included in the scope of the glucosyltransferase of the present disclosure.

The step of reacting sucrose and Stevioside with the enzyme may be carried out at a pH of 1 to 10, specifically at a pH of 2 to 9, and more specifically at a pH of 3 to 8, but the pH range is not limited thereto.

Additionally, the step of reacting sucrose and Stevioside with the enzyme may be carried out at 1°C to 80°C, specifically at 5°C to 70°C, and more specifically at 25°C to 50°C, but the temperature range is not limited thereto.

The transglycosylated Stevioside of the present disclosure may have remarkably excellent solubility as compared to Stevioside. Therefore, the sweetener composition of the present disclosure including the transglycosylated Stevioside may also have excellent solubility.

In order to achieve the objects of the present disclosure, another aspect of the present disclosure provides a sweetener composition including a transglycosylated Rebaudioside A.

As used herein, the term "transglycosylated Rebaudioside A" refers to a compound in which a saccharide is linked (transferred) to Rebaudioside A represented by Chemical Formula 2 below, which is one of the steviol glycosides. In particular, the saccharide may be glucose, and the transglycosylation may be transglucosylation.

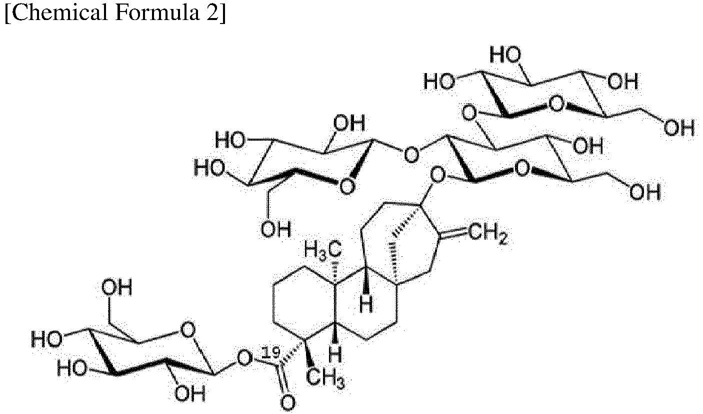

Specifically, the transglycosylated Rebaudioside A may be in the form in which glucose is linked to Rebaudioside A by a linkage via an α-(1,6) bond.

Specifically, the transglycosylated Rebaudioside A may be in the form in which glucose is linked to glucose conjugated to C₁₉ on the Rebaudioside A by a linkage via an α-(1,6) bond.

Specifically, the transglycosylated Rebaudioside A may be in the form in which 1 to 3 glucose molecules are linked to Rebaudioside A.

More specifically, the transglycosylated Rebaudioside A may be produced by reacting sucrose and Rebaudioside A as substrates with a glucosyltransferase.

Specific nucleotide sequence of a gene encoding the glucosyltransferase and protein information thereof can be obtained from a known database such as GenBank of NCBI, *etc.* However, in addition to the above known sequences, any protein may be included as long as it exhibits the same effect of transferring glucose as the glucosyltransferase without limitation to its origin or sequence, and a homologous protein or a variant protein may also be included in the scope of the glucosyltransferase of the present disclosure.

The step of reacting sucrose and Rebaudioside A with the enzyme may be carried out at a pH of 1 to 10, specifically at a pH of 2 to 9, and more specifically at a pH of 3 to 8, but the pH range is not limited thereto.

The step of reacting sucrose and Rebaudioside A with the enzyme may be carried out at 1°C to 80°C, specifically at 5°C to 70°C, and more specifically at 25°C to 50°C, but the temperature range is not limited thereto.

The transglycosylated Rebaudioside A of the present disclosure may have excellent sweetness as the bitter taste is reduced when glucose is linked to Rebaudioside A via an α- (1,6) bond as compared to when glucose is linked via an α-(1,4) bond. Additionally, the transglycosylated Rebaudioside A of the present disclosure may have remarkably excellent solubility as compared to Rebaudioside A. Therefore, the sweetener composition of the present disclosure including the transglycosylated Rebaudioside A may also have excellent sweetness and solubility.

In order to achieve the objects of the present disclosure, still another aspect of the present disclosure provides a sweetener composition including a transglycosylated Stevioside and a transglycosylated Rebaudioside A.

The "transglycosylated Stevioside" and "transglycosylated Rebaudioside A" are as described above.

The sweetener composition of the present disclosure may contain 40 parts by weight or more of the transglycosylated Rebaudioside A based on 100 parts by weight of the total weight of the transglycosylated Stevioside and the transglycosylated Rebaudioside A. Specifically, the composition may contain 50 parts by weight or more, 60 parts by weight or more, 70 parts by weight or more, or 75 parts by weight or more of the transglycosylated Rebaudioside A. When the content of the transglycosylated Rebaudioside A in the composition is 40 parts by weight or more, the composition shows the same or better effect with respect to the sensory evaluation (sweetness preference and overall preference) as compared to Rebaudioside A.

The sweetener composition of the present disclosure may have an improved bitter taste. The present inventors have found that the composition including the transglycosylated Stevioside and the transglycosylated Rebaudioside A has a reduced bitter taste as compared to the conventional Rebaudioside A, while showing remarkably excellent sweetness preference and overall preference.

The sweetener composition of the present disclosure may have improved solubility. Specifically, the solubility of the sweetener may be 40 g to 100 g, 50 g to 100 g, or 60 g to 100 g per 100g of water. The solubility may be obtained by storing an aqueous solution in which the sweetener is dissolved at 5°C, 15°C, 25°C, 35°C, 45°C or 55 °C for a week, followed by measuring the amount of the sweetener dissolved in water. The sweetener composition of the present disclosure may have improved solubility, which may not affect the change in the quality of sweetness, *etc.* according to an increase in the volume and water content of food when the sweetener is dissolved in a high concentration and added to food.

The sweetener composition of the present disclosure may be used for preparing sweeteners or providing sweetness to edible products. The sweetener composition of the present disclosure may be used as a sweetener for the purpose of cooking and/or processed foods. Additionally, the sweetener composition of the present disclosure may be used as a sweetener for pharmaceutical products in addition to edible products, but is not limited thereto. Further, the sweetener composition of the present disclosure may further include a flavoring agent, a preservative, a stabilizer, an antioxidant, *etc.,* but is not limited thereto.

The sweetener composition of the present disclosure has a feature of having improved sweetness due to reduced bitter taste and showing excellent sweetness preference and overall preference.

In order to achieve the objects of the present disclosure, still further another aspect of the present disclosure provides a food composition, including the sweetener composition including a transglycosylated Stevioside and a transglycosylated Rebaudioside A.

The food composition of the present disclosure may be prepared using methods commonly used in the art, and may be prepared by adding raw materials and ingredients commonly added in the art during preparation. Additionally, the food composition of the present disclosure uses a food as a raw material unlike generic drugs, and thus has no side effects that may occur during long-term administration thereof, and may be highly portable.

The food composition may contain the sweetener composition in an amount of 0.001 to 25% by weight, specifically 0.01 to 20% by weight, more specifically 0.01 to 10% by weight, based on the total weight of the composition, but is not limited thereto.

### [Detailed Description of the Invention]

Herein below, the present disclosure will be described in detail with accompanying exemplary embodiments. However, the exemplary embodiments disclosed herein are only for illustrative purposes and should not be construed as limiting the scope of the present disclosure.

### Example 1. Preparation of Transglucosylated Rebaudioside A and Evaluation thereof

### Example 1-1: Preparation of Transglucosylated Rebaudioside A

α-1,4 transglucosylated Rebaudioside A, in which glucose is linked (transferred) via an α-1,4 bond, was prepared using a known method (Food chemistry, 2014, 159, 151-156) as follows:
Ribaudioside A (Sigma Aldrich) and dextrin were mixed and then treated with CGTase (Toruzyme®, Novozyme) and reacted. Subsequently, the mixture was adsorbed onto an adsorption resin (HP-20) and desorbed with 20% ethanol. Thereafter, the desorbed solution was concentrated under reduced pressure and freeze-dried to prepare a sample.
α-1,6 transglucosylated Rebaudioside A, in which glucose is linked (transferred) via an α-1,6 bond, was prepared as follows:
   Ribaudioside A and sugar (CJ CheilJedang) were dissolved in 50 mM sodium acetate buffer, and then a glucosyltransferase was added thereto (final volume of 0.3 U/ml), and the mixture was reacted at 40°C for 48 hours. Thereafter, a sample was prepared by adsorption/desorption/concentration/freeze-drying in the same manner as in the preparation method of α-1,4 transglucosylated Rebaudioside A.

The glucosyltransferase transfers glucose from sucrose. In particular, the resulting transglucosylated product is in the form in which 1 to 3 glucose molecules are linked (transferred) to glucose conjugated to C₁₉ on the steviol glycoside (Stevioside or Ribaudioside A) by a linkage via an α-1,6 bond, which was confirmed by Nuclear Magnetic Resonance (NMR).

### Example 1-2: Evaluation of Sweetness and Quality of Sweetness

Two samples prepared in Example 1-1 above were independently dissolved in water and provided to panels for evaluation of actual sweetness and the quality of sweetness. The results are shown in Table 1 below.

**[Table 1]**

| Sample | Actual Sweetness | Quality of Sweetness |
|---|---|---|
| α-1,4 transglucosylated Rebaudioside A | 19 | Bitter taste is stronger than sweet taste, has greasy taste like starch syrup. Weak off-smell compared to α-1,6 transglucosylated Rebaudioside A, but strong off-flavor |
| α-1,6 transglucosylated Rebaudioside A | 26 | Gives sweet taste in the beginning, has a bit of bitter taste, but has clean taste. Has off-smell (alcohol smell, *etc.)* |

As shown in Table 1, it was confirmed that the α-1,6 transglucosylated Rebaudioside A showed higher sweetness as compared to the α-1,4 transglucosylated Rebaudioside A, and also had better quality of sweetness.

### Example 1-3: Evaluation of Solubility of Transglucosylated Rebaudioside A and Transglucosylated Stevioside

The solubility of Rebaudioside A (RA), Stevioside (STV), α-1,6 transglucosylated Rebaudioside A (RA-Glu) of Example 1-1, and transglucosylated Stevioside (STV-Glu) was measured. In particular, the transglucosylated Stevioside was obtained by reacting Stevioside and sucrose in the presence of a glucosyltransferase in the same manner as in Example 1-1.

6 g of each of Rebaudioside A, Stevioside, transglucosylated Rebaudioside A, and transglucosylated Stevioside was mixed with 10 ml and then dissolved by sonication at 50°C for 60 minutes. The resultant was incubated for 1 week in a water bath at 5°C, 15°C, 25°C, 35°C, 45°C, or 55°C. Thereafter, the resulting solution was centrifuged at 12000 rpm for 10 minutes, and 1 ml of the supernatant was collected and dried in an oven at 105°C to measure the solubility.

**[Table 2]**

| Temperature (°C) | Solubility (%) | | | |
|---|---|---|---|---|
| | STV | RA | STV-Glu | RA-Glu |
| 5 | 6.3 | 1.1 | 40↑ | 40↑ |
| 15 | 6.2 | 0.6 | 40↑ | 40↑ |
| 25 | 5.3 | 0.3 | 40↑ | 40↑ |
| 35 | 9.2 | 0.5 | 40↑ | 40↑ |
| 45 | 13.7 | 1.1 | 40↑ | 40↑ |
| 55 | 39.7 | 1.6 | 40↑ | 40↑ |

As shown in Table 2, it can be seen that the transglucosylated Stevioside and transglucosylated Rebaudioside A showed remarkably increased solubility as compared to Stevioside and Rebaudioside A, respectively.

### Example 2. Preparation of Mixture Comprising Transglucosylated Stevioside and Transglucosylated Rebaudioside A and Evaluation thereof

### Example 2-1: Preparation of Mixture Comprising Transglucosylated Stevioside and Transglucosylated Rebaudioside A

6% steviol glycoside raw material (Stevioside and Rebaudioside A (Reb A), where the ratio of Reb A (RA) was 40, 60, 80, 97% by weight) and 6% white sugar (CJ CheilJedang) were dissolved in 50 mM sodium acetate buffer, and then a glucosyltransferase was added (final volume of 0.3 U/ml) thereto, and the mixture was reacted for 48 hours.

Thereafter, the mixture was adsorbed onto an adsorption resin (HP-20) and then desorbed with 20% ethanol. The desorbed solution was concentrated under reduced pressure and then dried to prepare a mixture of transglucosylated steviol glycosides (a mixture of transglucosylated Stevioside and transglucosylated Rebaudioside A).

The ratio of the transglucosylated Stevioside to the transglucosylated Rebaudioside A in the thus-prepared mixture was maintained at the same level as the ratio of Stevioside to Rebaudioside A in the raw material.

### Example 2-2: Sensory Description Analysis of Mixture

Three mixture samples (containing transglucosylated RA in an amount of 40/60/80% by weight, hereinafter, referred to as RA40-Glu, RA60-Glu, RA80-Glu, respectively) among the mixture prepared in Example 2-1 were diluted to the sweetness (sweetness equivalent to 10% by weight of sugar) equivalent to Rebaudioside A (hereinafter, referred to as RA, purity of 97% or higher, Sigma Aldrich), and then presented to experts (n = 13) for descriptive analysis. The results are shown in Fig 1 and Table 3.

**[Table 3]**

| Sensory Attributes | RA | RA40-Glu | RA60-Glu | RA80-Glu |
|---|---|---|---|---|
| Sweetness Intensity | 3.4 | 3.5 | 3.5 | 3.5 |
| Sweetness Persistence | 2.9 | 3.2 | 3.2 | 3.4 |
| **Bitterness Intensity** | **3.7** | **3.4** | **3.0** | **2.8** |
| Feeling of Weight | 2.5 | 2.6 | 2.7 | 2.7 |
| Off-smell/Off flavor Intensity | 2.4 | 3.1 | 2.8 | 2.4 |
| Overall Preference | 2.9 | 2.5 | 3.0 | 3.2 |

As shown in Table 3, it can be seen that there is no significant difference between RA and the three mixture sample in terms of all sensory attributes except for bitterness intensity. Additionally, it can be found that the bitterness intensity of the three mixture sample (RA40-Glu/RA60-Glu/RA80-Glu) was significantly reduced as compared to that of RA.

### Example 2-3: Sensory Preference Evaluation of Mixture

Four samples of Example 2-2 were diluted to the equivalent sweetness 48 hours before evaluation, and the sensory evaluation was carried.

30 panels were given the four samples and required to evaluate the sweetness preference and the overall preference of the four samples on a 9-point scale (1= very much dislike, 5= neither dislike nor like, 9= very much like).

Then, the statistical analysis was converted to a 5-point scale to verify the significant difference through paired T tests (reliability level of 95%).

### (1) Comparison between RA and RA40-Glu

**[Table 4]**

| Sensory Attributes | RA | RA40-Glu | P-value |
|---|---|---|---|
| Sweetness Preference | 2.96 | 3.35 | 0.101 |
| Overall Preference | 2.81 | 3.00 | 0.502 |
| Additional Opinion | Bitter yet attractive taste, strong sweet taste at the end | Has distinctive odor (grassy scent, floral scent, *etc.*) Light sweet taste and gives freshness | - |

As shown in Table 4, the sweetness preference for RA and RA40-Glu were 2.96 and 3.35, and the overall preference therefor were 2.81 and 3.0, respectively, showing higher numerical values for RA40-Glu.

### (2) Comparison between RA and RA60-Glu

**[Table 5]**

| Sensory Attributes | RA | RA60-Glu | P-value |
|---|---|---|---|
| Sweetness Preference | 2.65 | 3.48 | 0.0003 |
| Overall Preference | 2.43 | 3.33 | 0.001 |
| Additional Opinion | Bitter taste, burning taste, attractive aftertaste | Good sweet taste, clean off-flavor and aftertaste, gives fresh feeling | - |

As shown in Table 5, the sweetness preference for RA and RA60-Glu were 2.65 and 3.48, and the overall preference therefor were 2.43 and 3.33, respectively, showing higher numerical values for RA60-Glu (p=0.001).

### (3) Comparison between RA and RA80-Glu

**[Table 6]**

| Sensory Attributes | RA | RA80-Glu | P-value |
|---|---|---|---|
| Sweetness Preference | 2.39 | 3.63 | 0.00001 |
| Overall Preference | 2.11 | 3.41 | 0.000002 |
| Additional Opinion | Bitter taste persists long which gives weak sweet taste | Favorable sweet taste, but has aftertaste off-flavor | - |

As shown in Table 6, the sweetness preference for RA and RA80-Glu were 2.39 and 3.63, and the overall preference therefor were 2.11 and 3.41, respectively, showing higher numerical values for RA80-Glu (p=0.000002).

### Example 2-4: Evaluation of Solubility of Mixture

6 g of each of RA and the mixtures of Example 2-1 was mixed with 10 ml and then dissolved by sonication at 50°C for 60 minutes. The resultant was incubated for 1 week in a water bath at 5°C, 15°C, 25°C, 35°C, 45°C, or 55°C. Thereafter, the resulting solution was centrifuged at 12000 rpm for 10 minutes, and 1 ml of the supernatant was collected and dried in an oven at 105°C to measure the solubility

**[Table 7]**

| Temperature (°C) | Solubility (%) | | | |
|---|---|---|---|---|
| | RA | RA40-Glu | RA60-Glu | RA80-Glu |
| 5 | 1.1 | 40↑ | 40↑ | 40↑ |
| 15 | 0.6 | 40↑ | 40↑ | 40↑ |
| 25 | 0.3 | 40↑ | 40↑ | 40↑ |
| 35 | 0.5 | 40↑ | 40↑ | 40↑ |
| 45 | 1.1 | 40↑ | 40↑ | 40↑ |
| 55 | 1.6 | 40↑ | 40↑ | 40↑ |

Upon comparison of the results of Table 7 and the results of Table 2, it was found that the mixture maintained high solubility, as the transglucosylated Stevioside (STV-Glu) and the transglucosylated Rebaudioside A (RA-Glu).

While the present disclosure has been described with reference to the particular illustrative embodiments, it will be understood by those skilled in the art to which the present disclosure pertains that the present disclosure may be embodied in other specific forms without departing from the technical spirit or essential characteristics of the present disclosure. Therefore, the embodiments described above are considered to be illustrative in all respects and not restrictive. Furthermore, the scope of the present disclosure is defined by the appended claims rather than the detailed description, and it should be understood that all modifications or variations derived from the meanings and scope of the present disclosure and equivalents thereof are included in the scope of the appended claims.

## Claims

1. A sweetener composition, comprising a transglycosylated Stevioside and a transglycosylated Rebaudioside A.

2. The sweetener composition of claim **1,** wherein the transglycosylated Rebaudioside A is comprised in an amount of 40 parts by weight or more based on 100 parts by weight of the total weight of the transglycosylated Stevioside and transglycosylated Rebaudioside A.

3. The sweetener composition of claim **1,** wherein the transglycosylation is transglucosylation.

4. The sweetener composition of claim **1,** wherein the transglycosylated Stevioside is in the form in which glucose is linked to Stevioside by a linkage via an α-(1,6) bond.

5. The sweetener composition of claim **1,** wherein the transglycosylated Rebaudioside A is in the form in which glucose is linked to Rebaudioside A by a linkage via an α-(1,6) bond.

6. The sweetener composition of claim **1,** wherein the transglycosylated Stevioside or the transglycosylated Rebaudioside A is in the form in which 1 to 3 glucose molecules are linked to Stevioside or Rebaudioside A.

7. The sweetener composition of claim **1,** wherein the composition has a reduced bitter taste.

8. The sweetener composition of claim **1,** wherein the composition has improved solubility.

9. A food composition, comprising the composition of claim **1.**
